# EUROPEAN PATENT APPLICATION

(11) **EP 4 530 859 A1**
(43) Date of publication of application: **02.04.2025**
(21) Application number: 23465541.3
(22) Date of filing: 26.09.2023
(51) Int. Cl.: G06F 11/30, G06F 1/3203, G01R 21/133, G06F 11/34

(54) **COMPUTER-IMPLEMENTED METHOD AND SYSTEM TO DETERMINE THE POWER CONSUMPTION OF A SOFTWARE APPLICATION RUNNING ON A SYSTEM**

(71) Applicant: Siemens Aktiengesellschaft, 80333 München (DE)
(72) Inventor: PARVAN, Andrei Leonard, 100245 Ploiesti, Prahova (RO); CATARON, Angel Doru, 500133 Brasov, Brasov (RO); COCORADA, Sorin Alexandru, 500218 Brasov, Brasov (RO); CRIZBASAN, Amelia, 500218 Brasov (RO); BALOTA, George, 500142 Brasov, Brasov (RO)
(74) Representative: Fierascu, Cosmina-Catrinel

(57) **Abstract**

Method to determine the power consumption of a software application running on a system, including the steps of:
a) Capturing the power consumption with a connected power meter, and capturing related system run-time parameters by the system, for different operating configurations of the software application, by the probes of the system and storing the power consumption and the related system run-time parameters as training data,
b) Setup and training of a prediction model with the training data,
c) Executing a software application on the system,
d) Estimating the power consumption of the software application running on the system based on the prediction model.

## Description

*Independent of the grammatical term usage, individuals with male, female or other gender identities are included within the term.*

The invention relates to a computer-implemented method and a system to determine the power consumption of a software application running on a system.

The knowledge of power consumption of software applications is important for the overall system design. Moreover, to further develop the software to reduce the power consumption becomes more and more important.

In prior art, there is limited support for the estimation of energy consumption of software applications.

Some manufacturers provide tools, however, limited to their own hardware and not for the entire software system.

Basically, when dedicated software tools are not available, physical power meter must be used.

In virtual environments, like cloud, virtual machines, remote hardware, physical power meter cannot be used, and one must rely on the data offered by the infrastructure provider.

It is the objective of the invention to provide a method and/or a system to assess the power consumption of software on a sub-system level.

The objective is solved by a computer-implemented method to determine the power consumption of a software application running on a system, the system comprising a data collector with probes for capturing run-time parameters of the system, including the steps of:
a) Capturing the power consumption with a connected power meter, and capturing related system run-time parameters by the system, for different operating configurations of the software application, by the probes of the system and storing the power consumption and the related system run-time parameters as training data,
b) Setup and training of a prediction model with the training data,
c) Executing a software application on the system,
d) Estimating the power consumption of the software application running on the system based on the prediction model.

The method provides a machine learning model to predict energy consumption of the software applications.

The input features of the prediction model are the runtime values of different parameters of the monitored system, e.g., CPU load, network traffic, disk I/O, memory access, connected sensors, etc., wherein the parameters represent features and/or subsystems of the system, which are controlled by the software applications.

The different operating configurations of the software application consider such different parameters, represented by the probes of the system, and captured by physical power consumption measurements.

Probes can be physical sensors or software elements, which sense the usage of features or subsystems of the system.

The operating configurations are a set of predefined parameters, selected out of the set of all parameter permutations.

The output of the prediction model is the estimated instantaneous power generated by the running software application, measured in Watt.

Training data is generated by a software application which runs on the monitored system in a training phase, logging the input parameters and the instantaneous power measured by the physical power meter.

The invention provides granular measurements on sub-system level.

Thereby, the prediction model can be re-used for multiple use-cases at the execution of software applications.

Moreover, the invention allows to measure the energy consumption of software running on virtualized hardware.

This prediction model enables the measurement of energy consumption without using a physical power meter, which is a much simpler alternative for measuring energy consumption of a software application.

Thus, a precise model for estimating the power consumption of the system, including sub-systems, can be obtained, which allows to estimate the individual power consumption on feature- or subsystem-level of the system.

A reduced complexity and reduced costs compared to the application of several measurement instruments is achieved.

A simplified integration with DevOps feedback loop is provided and an increased usability by using software only components is obtained.

In a further development of the invention, it is foreseen that the different operating configurations of the software application consider different operating modes at the run-time execution of the software application, including a first, full power mode, providing a software functionality of the software application with a predefined minimum number of features, and/or an second, energy saving mode, providing a partial software functionality of the software application with a predefined maximum number of features.

Thus, a precise model for estimating the power consumption of the system, including sub-systems, can be obtained.

In a further development of the invention, it is foreseen that the different operating configurations of the software application are determined by the number of features of the software application.

Thus, a precise model for estimating the power consumption of the system, including sub-systems, can be obtained.

In a further development of the invention, it is foreseen that the different operating configurations of the software application are determined by a CPU load and/or a network traffic and/or a storage disk operation of the system, respectively.

Thus, a precise model for estimating the power consumption of the system, including sub-systems, can be obtained.

Further, the objective of the invention is also solved by a system to determine the power consumption of a software application running thereon, comprising a data collector with probes, and a power meter is connected to the system, wherein the system is configured to execute the method according to the invention.

Further, the objective of the invention is solved also by a computer program product, comprising instructions which, when the program is executed by a computer, cause it to carry out the method/steps of the method according to the invention.

The invention is explained in more detail below with reference to an exemplary embodiment illustrated in the enclosed drawings. In the drawings shows:
- Fig. 1: a block diagram of a system as an embodiment of the invention at a training stage,
- Fig. 2: a block diagram of a system as an embodiment of the invention at an execution stage,
- Fig. 3: a flow chart as an embodiment of the method of the invention.

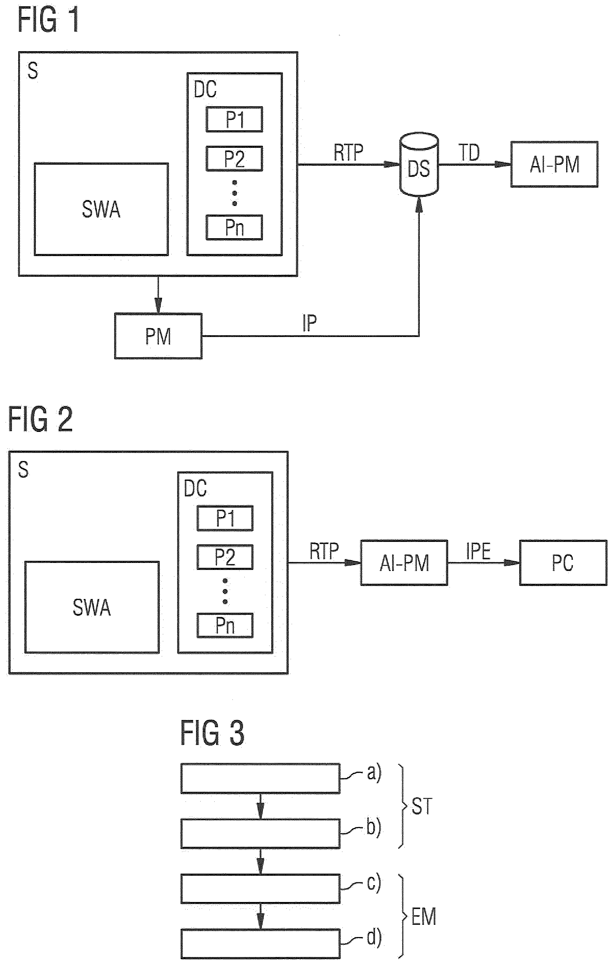

**Fig. 1** shows a block diagram of a system S as an embodiment of the invention at a training stage.

The system S is configured to determine the power consumption of a software application SWA running thereon.

The system S comprises a data collector DC with probes P1, P2, Pn for capturing run-time parameters RTP of the system S.

Further, a power meter PM is connected to the system to measure the instantaneous power IP consumed by the system S.

The system S is configured to execute method steps according to the claims.

The training stage comprises following two method steps for the setup and training ST of the prediction model AI-PM:
a) Capturing the power consumption with a connected power meter PM, and capturing related system run-time parameters RTP by the system S, for different operating configurations of the software application SWA, by the probes P1, P2, Pn of the system S and storing the power consumption and the related system run-time parameters RTP as training data TD,
b) Setup and training of a prediction model AI-PM with the training data TD,

The training data TD are stored in this embodiment in a data storage DS, e.g. a database.

Optionally, the different operating configurations of the software application SWA can consider different operating modes at the run-time execution of the software application SWA.

A first, full power mode can be foreseen, providing a software functionality of the software application SWA with a predefined minimum number of features.

Further, a second, energy saving mode can be foreseen, providing a partial software functionality of the software application SWA with a predefined maximum number of features.

The different operating configurations of the software application SWA can be determined by the number of features of the software application SWA.

Moreover, the different operating configurations of the software application SWA can be determined by a CPU load and/or a network traffic and/or a storage disk operation of the system, respectively.

The different operating configurations are linked to the probes P1, P2, Pn of the data collector DC, which probes P1, P2, Pn are configured to capture run-time parameters RTP of the system S, i.e., the involved software application SWA, and respective sub-systems.

**Fig. 2** depicts a block diagram of a system of the system of the previous figure at an execution stage.

The system S is configured to execute method steps according to the claims.

The execution stage comprises following two method steps for the execution and measurement EM of power consumption of software application SWA:
c) Executing a software application SWA on the system S,
d) Estimating the power consumption IPE of the software application SWA running on the system S based on the prediction model AI-PM.

**Fig. 3** shows an embodiment of a flow chart of the method of the invention with steps a) to d).

The training stage includes setup and training ST of the prediction model AI-PM.

The execution stage includes the execution and measurement EM of power consumption of software application SWA.

### List of reference numerals:

- AI-PM: AI prediction model
- DC: data collector
- DS: data storage, database
- EM: execution and measurement of power consumption of software application
- IP: instantaneous power
- IPE: instantaneous power estimation
- P1, P2, Pn: probe
- PC: power consumption
- PM: power meter
- RTP: system run-time parameter
- S: System, monitored hardware system
- ST: setup and training of prediction model
- SWA: software application
- TD: training data

## Claims

1. Computer-implemented method to determine the power consumption of a software application (SWA) running on a system (S), the system (S) comprising a data collector (DC) with probes (P1, P2, Pn) for capturing run-time parameters (RTP) of the system (S), including the steps of:
a) Capturing the power consumption with a connected power meter (PM), and capturing related system run-time parameters (RTP) by the system (S), for different operating configurations of the software application (SWA), by the probes (P1, P2, Pn) of the system (S) and storing the power consumption and the related system run-time parameters (RTP) as training data (TD),
b) Setup and training of a prediction model (AI-PM) with the training data (TD),
c) Executing a software application (SWA) on the system (S),
d) Estimating the power consumption (IPE) of the software application (SWA) running on the system (S) based on the prediction model (AI-PM).

2. Method according to the preceding claim, wherein the different operating configurations of the software application (SWA) consider different operating modes at the run-time execution of the software application (SWA), including a first, full power mode, providing a software functionality of the software application (SWA) with a predefined minimum number of features, and/or an second, energy saving mode, providing a partial software functionality of the software application (SWA) with a predefined maximum number of features.

3. Method according to one of the preceding claims, wherein the different operating configurations of the software application (SWA) are determined by the number of features of the software application (SWA).

4. Method according to one of the preceding claims, wherein the different operating configurations of the software application (SWA) are determined by a CPU load and/or a network traffic and/or a storage disk operation of the system, respectively.

5. System (S) to determine the power consumption of a software application (SWA) running thereon, comprising a data collector (DC) with probes (P1, P2, Pn), and a power meter (PM) is connected to the system, wherein the system (S) is configured to execute the method according to one of the preceding claims.

6. Computer-program-product, comprising instructions which, when the program is executed by a computer, cause it to carry out the method/steps of the method according to one of the preceding claims.
